# EUROPEAN PATENT SPECIFICATION

(11) **EP 1 566 106 B1**
(45) Date of publication and mention of the grant of the patent: **04.03.2015**
(21) Application number: 03794162.2
(22) Date of filing: 01.09.2003
(51) Int. Cl.: A23K 1/18

(54) **BOUND FEED AND PROCESS FOR PRODUCING THE SAME**
GEBUNDENES FUTTER UND HERSTELLUNGSVERFAHREN DAFÜR
ALIMENTS CONSOLIDES ET PROCEDE DE PRODUCTION CORRESPONDANT

(30) Priority: 06.09.2002 JP 2002262084
(43) Date of publication of application: 24.08.2005
(73) Proprietor: NIPPON SUISAN KAISHA, LTD., Tokyo 100-8686 (JP)
(72) Inventor: YOSHITOMI, Bunji, Nippon Suisan Kaisha, Ltd., Hachioji-Shi, Tokyo 192-0906 (JP); OBAMA, Minako, Nippon Suisan Kaisha, Ltd., Hachioji-Shi, Tokyo 192-0906 (JP); UEDA, Takashi, Nippon Starch Chemical Co., Ltd., Osaka-Shi, Osaka 532-0032 (JP); KONOO, Shigeki, Nippon Starch Chemical Co., Ltd., Osaka-Shi, Osaka 532-0032 (JP)
(74) Representative: TBK
(86) International application number: PCT/JP2003/011155
(87) International publication number: WO 2004/021800

(56) References cited:
- JP-A- 3 008 435
- JP-A- 4 040 861
- JP-A- 5 329 810
- JP-A- 6 264 696
- JP-A- 2000 063 783
- JP-A- 2000 279 080
- JP-A- 2001 151 937
- JP-A- 2002 000 151
- DATABASE WPI Section Ch, Week 198446 Derwent Publications Ltd., London, GB; Class C03, AN 1983-28377K XP002343940 & JP 58 023753 A (HOKUBU TAIHEIYO MAK) 12 February 1983 (1983-02-12)

## Description

### TECHNICAL FIELD

The present invention relates to feed which is used for feeding livestock or fish, and a method for producing such feed. The invention relates to feed obtained by secondarily forming/bonding at least one kind of solid feed, and to a method for producing such feed. The invention relates to compound feed having a desired size obtained by forming/binding plural pre-produced solid feed such as pellets, or by forming/binding plural pellets with vitamins, pigments and others in the form of tablets or granules into compound feed, and to a method for producing such compound feed.

### BACKGROUND ART

Feed for cultivated fish can be generally classified into two categories: solid feed and powdery feed.

Generally, the powdery feed containing gum or an adhesive agent is mixed with fresh or frozen fish meat, minced, formed after added water or fish oil as the occasion demands, and served as moist pellets. In some cases, water or fish oil is added to powdery feed, and the mixture is formed into moist pellets and served.

On the other hand, the solid feed is obtained by taking cereals, cereal husks, oil-seed cake and meal, animal-derived materials, all existing as powders, selecting one or more of them, combining them, and forming the mixture. For this purpose, the mixed feed materials are pulverized and strained to produce a homogenous mixture or grains whose size is adjusted to that desired, and then the mixture is transferred to a forming machine such as an extruder or a pelleter so that the mixture can be formed as desired.

With regard to the forming of a powder, various concepts have been offered. Here, the manner by which a powder is formed will be described assuming that the powder is formed with an extruder or a pelleter as is usual in the production of feed.

When an extruder is used in the forming of a powder, a powdered mixture serving as a starting material is transferred into the extruder, to which water is added. Or, prior to the transfer to the extruder, water is added to the powdered mixture. Then, heating is started, and high pressure is applied to the extruder. The mixture is liquified. When the mixture is extruded as pellets outside, where atmospheric pressure prevails, the high pressure is released, moisture in the pellets is vaporized, and the temperature of the pellets lowers, which causes the pellets to have a network structure. To be liquified in the extruder, the powdered mixture must receive not only appropriate heating and pressurization but also an adequate amount of moisture.

When a pelleter is used in the forming of a powder, a powdered mixture serving as a starting material is appropriately moistened before it is transferred to the pelleter as in the case with the extruder. However, the amount of water added is far lower for the pelleter than for the extruder. In some cases, the powdered mixture may be transferred to the pelleter without receiving any deliberate addition of moisture. The appropriately moistened mixture is transferred to the pelleter, in which the mixture is formed under high pressure into pellets. That is, in more detail, the powdered mixture is condensed under high pressure which causes high temperature to develop in the mixture, and thus the mixture is compounded so that the original powdered materials are formed into a compound.

In any case, the forming of a powder is achieved by compounding the original powdered materials via chemical and physical actions. This is applied to the production of solid feed for livestock. Currently developed extruders enable the production of feed that has a desired moisture absorbing ability, oil absorbing ability and specific gravity, and the production of feed using such extruders is spreading.

However, the current production of solid feed is achieved, as described above, by forming the original powdered materials into a compound, and this imposes certain restrictions regarding the properties of the resulting solid feed.

One of the problems encountered with current solid feed relates to its size.

Patent document 1(Japanese Unexamined Patent Publication No. 4-40861) describes artificial feed for cultivated fish obtained by packing feed into a tubular casing made from carrageenan.

JP 06 261696 A relates to a feed composition composed of wholemeal, krill meal, corn starch, potato starch, mineral mix, calcium phosphate, choline chloride, feed oil, which are supplied to a feeder of an extruder together with water and an oil and fat. The supplied components are mixed with each other, transferred to the main body of the extruder and extruded through a die by rotating the screw at a barel temperature of 160°C.

### DISCLOSURE OF THE INVENTION

Generally, solid feed exists as pellets having a spherical or columnar shape, and the maximum minor axis length is about 30 mm, and maximum major axis length is about 50 mm. If the pellet had a size larger than this, it would fall as a result of its own weight as soon as it was extruded from a extruder or would be destroyed or deformed on account of physical impact it would receive during its transfer to a next step. Therefore, in order to have stable physical properties, the pellet must have a size falling within the above range.

Recently, there has been a demand for feed suitable for growing large fish such as tuna. The required feed, when it exists as ellipsoidal pellets, must have a maximum minor axis length of about 100 mm and maximum major axis length of about 300 mm. According to the conventional method of producing solid feed by forming powdered materials into a compound, it is impossible to produce such large ellipsoidal pellets.

Further, production of solid feed by a conventional method has a number of problems as described below.

Firstly there is a problem involved in drying. Generally, in the production of solid feed, pellets are dried to inhibit their moisture-dependent degenerative activities and to thereby maintain their shape and quality. Drying is allowed to occur such that the moisture content of the pellets becomes about 10%. Drying may be achieved by various methods. The most common method employed in the production of solid feed utilizes warm air blowing. This method consists of exposing the pellets to warm air-flow, and allowing the temperature of the pellets to rise, which promotes vaporization of the moisture in the pellets. In this case, vaporization occurs most readily from the moisture present on the superficial layer of the pellets, and thus the time required for drying is determined by two factors: the rate of vaporization at the superficial layer of the pellets, and the rate of dispersion of moisture in the pellets. Thus, if the rate of vaporization at the superficial layer of the pellets is equal to the rate of dispersion of moisture in the pellets, drying occurs most efficiently.

Generally, as drying occurs at a higher temperature, the time required for drying becomes shorter. In the production of solid feed, if drying occurs at an extremely high temperature, it will affect the property of the feed, which will lead to degeneration of its quality. Particularly, vitamins and pigments, which are generally susceptible to high temperatures, will be readily destroyed. To avoid this, in the production of solid feed, drying should be achieved by exposing pellets to a comparatively low temperature over a long period. This requires careful adjustment of the rate of drying during the production of solid feed.

The shape of the pellets is an important factor involved in drying. As described above, drying is determined by the rate of vaporization at the superficial layer of the pellets relative to the rate of dispersion of moisture in the pellets. If solid feed consists of spherical pellets, the volume (weight) of each pellet is proportional to the third power of its diameter while its surface area to the second power of its diameter. On the other hand, the drying speed of a spherical pellet is proportional to its surface area, and is inversely proportional to its weight (volume). Thus, for example, if there are two kinds of solid feed consisting of similar spherical pellets, and one spherical pellet has a diameter X times as large as the other, theoretically, the time required for drying the latter solid feed is X2 times as long as that required for drying the former. Thus, in the production of solid feed suitable for growing large fish such as tuna, pellets constituting the solid feed require a significantly long time for drying, which makes it practically impossible to mass produce such large pellets.

The composition of feed is a second problem. The composition of feed or nutrients in the feed is adjusted in accordance with the kind of fish to be fed, its growth state, feeding season, and time of marketing. To satisfy such various needs of fish cultivators, the feed manufacturer must produce various kinds of feed at the same time, or must stop, on demand, a production line, remove an old material, clear the line, and place a new material in place of the old material. This causes time loss and reduced yield.

The feed contains components which are susceptible to heating. They are combined with other components, foemed and dried. During this process, they are damaged as a result of heating and pressurization, and decomposed. To compensate for this loss, it is customary to assess such possible loss, and add an extra amount of the heat-labile components, which also leads to an increased cost.

The variation of feed shape is a third problem. The size of feed should be increased in accordance with the growth of the fish to be fed. If the size of feed matches the growth of the fish to be fed, it improves the feeding efficiency.

When it is required to alter the shape (generally columnar) of feed, it is customary to change the outlet nozzle of an extruder in accordance with the required size of feed. To change the outlet nozzle, however, the production line must be stopped, which causes reduced productivity.

Briefly, to satisfy the various needs of consumers, the manufacturer must have at hand a wide variety of facilities and materials, which requires not only a huge initial investment but also a considerable running cost. Moreover, if there is a new need in the market, the manufacturer would not be able to meet the need utilizing the existent facilities and materials. This is a fundamental problem inherent to the production of fish feed.

Given this trend, advances in specialization are being made in the fish feed industry. However, the manufacturer who produces a single product all year round could not earn a living, no matter how specialized he may be in the manufacture of that product. Thus, a single manufacturer usually produces at one time at least several tens of different kinds of feed, which accounts for the increased cost in the current production of fish feed. This, if left untreated, will cause the competitiveness of domestic fish feed to be reduced, and result in the decline of the domestic fish cultivation industry

An object of the present invention is to provide solid feed having a desired size, particularly solid feed for cultivating large fish such as tuna, and a simplified method for producing suchsolid feed.

Another object of the invention is to provide solid feed having a desired size which contains vitamins and pigments, that is, nutrients susceptible to heat, and in which the quality of the nutrients is safely protected against deterioration, particularly such solid feed for large cultivated fish such as tuna, and a method for producing such solid feed.

This is achieved by the subject matter of the independent claims.

The inventors have carried out extensive research to solve the problems described above, and found that it is possible to produce feed having a desired size by forming/binding pellets produced by extruders(referred as "EP" hereafter) using a hot melt-type bonding agent into a compound. They found further that the feed produced as above passes through the digestive tract of cultivated fish at a higher speed than that observed for the conventional feed having a similar size. Based on these findings, the inventors achieved the present invention.

The essence of the invention is to provide compound feed having a desired size obtained by secondarily combining one or more kinds of solid feed, preferably compound feed having a spherical or ellipsoidal shape whose diameter or major axis length is 5 cm or longer.

At least one kind of the solid feed is a formed solid feed, preferably a pellet produced by an extruder. In this case, the compound feed of the invention having a desired size, or preferably having a spherical or ellipsoidal shape whose diameter or major axis length is 5 cm or longer is obtained by secondarily combining one or more kinds of solid feed of which at least one is a formed solid feed, preferably a pellet produced by an extruder.

The compound feed of the invention is obtained by adding a component in the form of tablets, granules or powder, and optionally a heat-labile component to one or more kinds of solid feed. In this case, the compound feed of the invention includes not only one or more kinds of solid feed of which preferably at least one is a pellet produced by an extruder, but also a component in the form of tablets, granules or powder being optionally combined with a heat-labile component, and is obtained by secondarily combining the one or more kinds of solid feed together with the latter components into a compound having a desired size, or a compound having a spherical or ellipsoidal shape whose diameter or major axis length is 5 cm or longer.

The hot melt-type bonding component includes water-containing starch powders, starch plasticizers, etc., specifically low-viscosity starch containing urea or the like and/or polyatomic alcohol or the like, sugars whose degree of polymerization is 10 or less, and an oil or fat which is solid at normal temperature. The compound feed of the invention having a desired size, or preferably having a spherical or ellipsoidal shape whose diameter or major axis length is 5 cm or longer is preferably obtained by secondarily combining one or more kinds of solid feed of which preferably at least one is a formed solid feed, more preferably a pellet produced by an extruder, together with a hot melt-type bonding component, specifically a water-containing starch powder, starch plasticizer, low-viscosity starch containing urea or the like and/or polyatomic alcohol or the like, sugar whose degree of polymerization is 10 or less, or oil or fat which is solid at normal temperature, as well as a component in the form of tablets, granules or powder as needed.

An edible casing, specifically capsules or casings having pores sufficiently small to prevent the escape of the contents may be used for containing solid feed. The compound feed of the invention is obtained by secondarily containing one or more kinds of solid feed of which preferably at least one is a formed solid feed, more preferably a pellet produced by an extruder, together with a component in the form of tablets, granules or powder as needed. The compound feed of the invention can have a desired size, or preferably have a spherical or ellipsoidal shape whose diameter or major axis length is 5 cm or longer, being contained in an edible casing, specifically capsules having pores sufficiently small to prevent the escape of the contents.

The essence of the invention is to provide a method for producing compound feed comprising a step of secondarily combining one or more kinds of solid feed, or preferably forming/bonding one or more kinds of solid feed into compound feed with a hot melt-type bonding component such as a water-containing starch powder, low-viscosity starch powder containing a starch plasticizer, water-containing sugar whose degree of polymerization is 10 or lower, and oil which is solid at normal temperature.

### BRIEF DESCRIPTION OF THE DRAWINGS

Fig. 1 includes diagrams for illustrating the concept of "compound" used in this Specification which explain how constitutive solid feed are combined into compound feed of the invention.
Fig. 2 includes diagrams for illustrating how different combinations of plural constitutive solid feed will produce different kinds of compound feed of the invention.
Fig. 3 presents a photograph of compound feed prepared as in Example 9.
Fig. 4 illustrates how compound feed of Example 13 is prepared.
Fig. 5 illustrates how compound feed of Example 14 is prepared.
Fig. 6 shows the residence of test feed samples in the fish digestive tract as a function of time.

### BEST MODE FOR CARRYING OUT THE INVENTION

The present invention relates to compound feed obtained by secondarily combining one or more kinds of solid feed, and the term "compound" refers not only to direct bonding of components, but also to packing components.

The compound feed of the invention is obtained by combining one or more kinds of solid feed together with a component in the form of tablets, granules or powder as needed. Combination may occur by directly bonding the components, packing the components, packing the bonded components, or bonding the packed components.

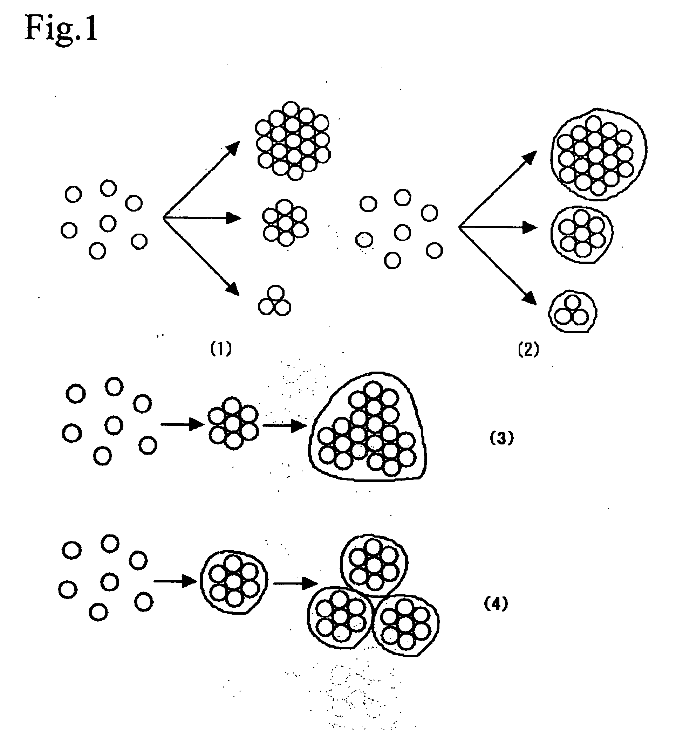

Fig. 1 illustrates the concept of combination: (1) represents direct bonding; (2) simple packing, (3) direct bonding followed by packing, and (4) packing followed by direct bonding. These combinations represent examples which may be used to attain the purpose of the invention.

According to the present invention, the problem resulting from the restrictions imposed on the size of feed encountered with a conventional molding machine can be solved. This is because according to the invention it is possible to obtain feed having a desired size by directly bonding different mold components, packing them with another component, bonding the packed components, or packing the bonded components. Thus, according to the invention, it is possible to meet every possible need with regard to feed size.

Generally, components consisting of vitamins or pigments are so susceptible to heating that they are easily damaged during processing, which accounts for their loss during processing. In the conventional method, they are extruded together with other components, and subjected to a drying process which involves heating. According to the present invention, those components may take the form of tablets, granules or powder before they are combined with other components. This allows them to be safely protected against the damaging effects of heating and prevents their loss during processing.

As described above, feed materials include, generally speaking, cereals, cereal husks, oil-seed cake and meal, and animal-derived materials. In addition, they may include vitamins, minerals and pigments. One or more of them are selected, combined, and formed in accordance with the growth of the fish to be fed and the feeding season, to give pellets having an appropriate size and shape which are marketed as a product.

Thus, even if feed is supplied to the same fish, its content must be changed in accordance with the growth of the fish and the feeding season, because the nutrition requirements of the fish change with their growth and the time of year. Generally, pellets are classified according to the kind of fish to be fed, and to their size. Thus, pellets to be fed to the same fish and having the same size are grouped together and treated as the same product. However, pellets treated as the same product may have different contents according to the growth of the fish to be fed or to the current needs of consumers. Considering these factors, and classifying pellets further according to their contents, the number of products will become immense.

However, the feed content includes a number of fundamental elements, and such fundamental elements are invariably included in every feed. If such fundamental elements are combined and processed into pellets, and other variable components are added to such pellets as needed, it will become unnecessary to produce various feed pellets containing different constituents to meet a variety of current needs.

Of course, it is necessary to select fundamental elements, combine them and process them into pellets having an appropriate shape and size. However, since all feed manufacturers have basic facilities and materials, it will greatly improve their production efficiency if they are allowed to continuously produce pellets having the same content and same size.

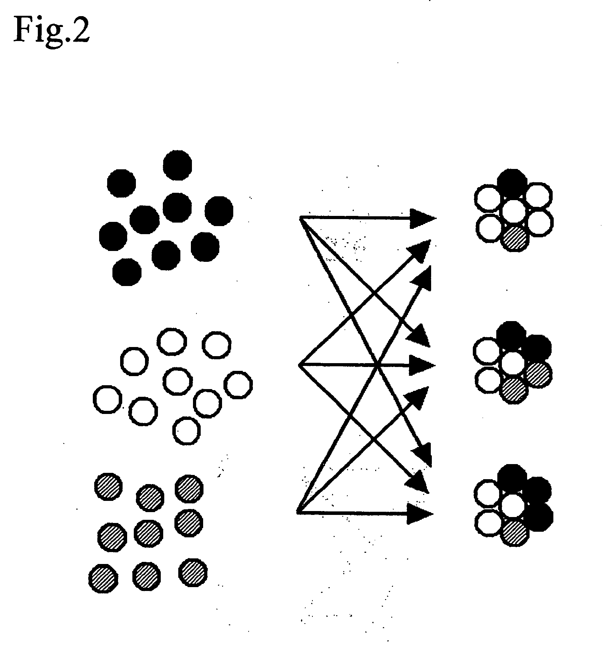

Fig. 2 shows the concept underlying this type of feed production.

Each element of compound feed is processed and dried. Thus, they do not require further drying even if it is combined with other elements into compound feed, which will improve the production efficiency.

### (1) Direct bonding

One or more kinds of solid feed are bonded together to form compound feed having a desired size using, as a bonding agent, a water-soluble material such as starch, dextrin, sugar or the like, a protein material which is digestible in the fish's digestive tract such as gelatin, collagen, ground fish meat or the like, or a lipid material which is digestible in the fish's digestive tract.

### (2) Packing

One or more kinds of solid feed are packed with a film to form compound feed having a desired size, the film being made from a water-soluble material such as starch, dextrin, sugar or the like, or a protein material which is digestible in the fish's digestive tract such as gelatin, collagen, ground fish meat or the like.

### (3) Direct bonding followed by packing

A plurality of compound feeds obtained by direct bonding as described above in paragraph (1) are packed with a film in the manner described in paragraph (2) to form compound feed having a desired size.

### (4) Packing followed by direct bonding

A plurality of compound feeds obtained via packing as described above in paragraph (2) are bonded together in the manner described in paragraph (1) to form compound feed having a desired size.

The compound feed of the invention having a desired size is obtained by mixing solid feed with a hot melt-type bonding agent, placing the mixture in a retainer with molds or frames having a desired size, molding the mixture by heating, cooling the molds, and removing the molds from the retainer.

The hot melt-type bonding agent for use in the invention may include firstly water-containing starches and sugars whose degree of polymerization is 10 or lower. Suitable starch includes raw potato starch, corn starch, waxy corn starch, tapioca starch, sago starch, green pea starch or the like, their esterified derivatives, ether derivatives, alpha-analogs, and low-viscosity starches obtained via oxidation, acid treatment, dextrinization, etc. They may be used alone or in combination. Low-viscosity starches are preferred because they are easily gelatinized and have a good fluidity on the solid feed. Suitable sugars for the invention whose degree of polymerization is 10 or lower may include monosaccharides such as glucose, galactose, etc.; disaccharides such as cane sugar, maltose, etc.; and oligosaccharides such as maltotriose, maltotetraose, etc. In addition to the water content inherent to starch, a necessary amount of water may be added. The amount of water added is preferably 20 to 100 parts by weight, and more preferably 30 to 50 parts by weight with respect to 100 parts by weight of starch. Addition of water may be achieved by adding water to solid feed prior to admixture, adding water to starch and using the water-containing starch onto the solid feed, or spraying water droplets over solid feed onto which starch has been dispersed. When sugar whose degree of polymerization is 10 or lower is used, a necessary amount of water should be added to the sugaras with starch.

Next, the hot melt-type bonding agent may include a starch system containing a plasticizer. Such a starch system is obtained by gelatinizing a starch powder together with a plasticizer into a gel, and subjecting the gel to a drying process based on spray-drying or freeze-drying, to thereby convert the gel into a powder. Suitable starch material includes raw starch powders, various starch derivatives, etc. Low-viscosity starches are preferable because, when liquefied by heating, they are easily gelatinized, have a good fluidity on the solid feed, and have a high bonding activity. The low-viscosity starch may include, as non-limiting examples, roasted dextrin, enzymatically modified dextrin, acid-treated starches, oxidized starches, etc., and their esterified derivatives and ether derivatives.

The starch plasticizer is not limited to any specific one, as long as it can promote the gelatinization of starch, and confer a plastic property to the resulting gel. The starch plasticizer may include, for example, urea, thiourea, guanidine, paratoluenesulfonamide, melamine, polyols such as ethylene glycol, diethylene glycol, polyethylene glycol, propylene glycol, polypropylene glycol, hexamethylene glycol, etc., glycerin, diglycerin, polyglycerin, trimethyl propane, and polyatomic alcohols such as pentaerythritol, sorbitol, mannitol, etc. Among them, urea and polyglycerin are preferred.

The plasticizer is preferably added at 10 to 100 parts by weight with respect to 100 parts by weight of starch. This is because it is then possible for the plasticizer to sufficiently support the gelatinization of starch, and confer a satisfactory fluidity to the resulting gel. The plasticizer is more preferably added at 20 to 70 parts by weight with respect to 100 parts by weight of starch. Furthermore, an aqueous solution of a gelling material such as gum arabic may be added as needed.

An oil or fat that is solid at normal temperature may be used. When an oil is added as a bonding agent to solid feed, it melts with heating and disperses between the molds, and binds them together by solidifying again when cooled. Suitable oils for the invention may include coconut oil, palm kernel oil, cacao oil, horse fat, sheep fat, chicken fat, sheep fat, pig fat, cattle fat, butter, margarine, and various kinds of solidified oils that are solid at normal temperature.

The amount of a hot melt-type bonding agent added should be adjusted so that the bonding agent can coat the surface of solid feed, and is preferably 3 to 5 parts by weight with respect to 100 parts by weight of solid feed. The bonding agent is added as a powder to the solid feed. If the solid feed contains an oily element, the bonding agent may be applied to the solid feed without pretreatment. If the solid feed do not contain an oily element, pretreatment such as moistening of the surface of the solid feed may be required.

Heating is performed by means of microwave radiation. A microwave oven was used as a experimental tool. The duration of heating may vary depending on the target size of the compound feed, the presence of a plasticizer, etc., but normally it is five seconds to 10 minutes when the oven is activated at 800W. If the duration were equal to or shorter than five seconds, the bonding would not be satisfactory. On the contrary, if the duration were equal to or longer than 10 minutes, it would degrade the nutritional elements of the compound feed. As a rule of thumb, if 50 g of solid feed is to be heated, heating lasting two minutes will be satisfactory when water-containing starch is used as a bonding agent, and heating lasting one minute thirty seconds will be satisfactory when low-viscosity starch containing a starch plasticizer is used as a bonding agent. A simple heater-based oven may be used instead of the microwave oven. A heating apparatus with which one can heat solid feed niformly from their surface to core in a short period of time is ideal.

A suitable retainer for the invention may take any shape and size. The retainer may be made from any material, as long as the material will not degrade even when heated with a microwave oven, and the material may include, for example, a synthetic resin such as polypropylene, wood, cardboard, etc. The retainer may have a lid through which pressure can be applied to solid feed to further ascertain the bonding of the solid feed. The retainer has a separation layer of silicon on its inner surface so that compound feed can be easily separated from the retainer. If water has been added to solid feed, the retainer may have an opening to vent steam.

Suitable casings made of an edible film for the invention may include, for example, casings such as those used in the production of hams and sausages, natural casings such as sheep gut, artificial casings, comparatively large gelatin capsules used in the production of medicines, etc. Solid feed are placed in such a casing and sealed. During this operation, vitamins, minerals or an antibiotic in the form of tablets may be placed in the same casing together with the solid feed, and sealed. After introduction of solid feed in a casing, the casing is preferably closed and de-aerated. To produce compound feed that sinks by itself when thrown in water, it is preferable to prepare multiple pores on the surface of the casing, or to prepare a casing having a fine mesh structure. This is because, when compound feed covered with such a casing is thrown in water, water penetrates the casing to moisten its interior and thereby promote the sinking of the compound feed. Furthermore, if the compound feed contains some fish attractant, the substance will readily dissolve in water to attract fish towards the feed. If compound feed that floats on water when thrown in water is desired, it is possible to prepare such feed by using porous solid feed in combination with a porous casing.

### Operation

If the method of the invention is used for producing feed for fish, the effects and advantages as described below will be insured.

### With regard to production professes

1) The method of the invention for producing feed for fish comprises preparing different kinds of solid feed, combining one or more kinds of solid feed into compound feed having a desired size. Thus, even when it is required to change the size of a given product, it is unnecessary to stop the line used for the production of the solid feed and exchange an old nozzle for a new one, which will improve the production efficiency.
2) Since the different kinds of solid feed initially prepared as fundamental units for compound feed having a desired size may be limited to a minimum, production efficiency is insured.
3) If plural kinds of solid feed different in nutritious content and other are prepared in advance, they can be readily combined them in the required contents and size as appropriate to match the kind of fish and the current growth of the fish.
4) Therefore, it is possible for the manufacturer to readily prepare, via simplified processes, feed in response to orders from consumers, or to provide feed in small lots.
5) Since the method does not include foeming and drying, feed is practically saved from the risk of being damaged as a result of heating or pressurization. Namely, according to the method of the invention, loss of heat-labile components as a result of processing can be minimized.

### With regard to compound feed

1) Since compound feed is obtained by forming/bonding constitutive solid feed, it is possible to obtain compound feed having a desired size.
2) Since compound feed of the invention is more porous than comparable conventional solid feed having the same size, it better retains liquid components such as water, fish oil or the like as well as powdery components.
3) Since compound feed of the invention is comparatively porous, it readily dissolves in digestive juice when ingested in the digestive tract of fish, and thus is more readily absorbed through the digestive tract than comparable conventional solid feed.

The present invention will be detailed below with reference to examples. However, the present invention is not limited in any way to these examples.

### Preparation 1

To 200 parts by weight of oxidized starch were added 60 parts by weight of urea, 10 parts by weight of polygylcerin #310 (Sakamoto Pharmaceutical Co.), and 880 parts by weight of water, and the mixture was stirred. The mixture was kept at 80-95°C until it turned from a slurry into a uniform paste. The paste, while kept at 60°C, was spray-dried with a spray dryer, to produce a hot melt-type starch powder.

### Preparation 2

The same method was employed as in Preparation 1 except that guanidine lactate was used instead of urea, to produce another hot melt-type starch powder.

### Example 1

Water was sprayed over 10 g of EP pellets, FatRich 6 (Nippon Suisan), obtained by means of an extrude. The pellets adsorbed 0.3 g of water on the surface. To the pellets were added 0.2 g of enzymatically modified dextrin and 0.3 g of a starch powder chosen from the group listed in Table 1, and the mixture was introduced in a tubular retainer (made from polypropylene) having a diameter of 3 cm and height of 2.5 cm. Closure of the retainer was achieved by slightly pressing a lid downward to condense the contents. The retainer was placed in a microwave oven and heating was achieved by activating the oven at 800W for 60 seconds. The retainer was removed from the oven, and allowed to cool to room temperature. The mixture, now converted into a mold, was removed from the retainer.

### Example 2

The same method as in Example 1 was employed to produce a mold except that 0.5 g of the hot melt-type starch powder obtained in Preparation 1 or Preparation 2 was used without the addition of water, instead of 0.2 g of enzymatically modified dextrin and 0.3 g of a starch powder chosen from the group listed in Table 1.

### Example 3

The same method as in Example 1 was employed to produce a mold except that 0.5 g of palm oil was used instead of 0.2 g of enzymatically modified dextrin and 0.3 g of a starch powder chosen from the group listed in Table 1. The palm oil, after being heated to about 70°C, was added to the solid feed, FatRich 6.

### Example 4

The same method as in Example 1 was employed to produce a mold except that 0.5 g of cane sugar was used instead of 0.2 g of enzymatically modified dextrin and 0.3 g of a starch powder chosen from the group listed in Table 1.

### Comparable Example 1

The same method as in Example 1 was employed to produce a mold except that 0.5 g of tapioca starch was used instead of 0.2 g of enzymatically modified dextrin and 0.3 g of a starch powder chosen from the group listed in Table 1. However, the mold collapsed, as soon as it was removed from the retainer.

### Comparable Example 2

The same method as in Example 1 was employed to produce a mold except that 0.5 g of potato starch was used instead of 0.2 g of enzymatically modified dextrin and 0.3 g of a starch powder chosen from the group listed in Table 1.

### Testing Example 1

To check the moldability of test samples, the molds obtained in Examples 1 to 4, and in Comparable Example 2 were allowed to fall from a height of 1 m and break onto a concrete floor. The breaking was observed for those test samples, and the evaluation results regarding their moldability based on the observations are listed in Table 1.

### Testing Example 2

To check the disintegration tendency of test samples when they are put in water, the molds obtained in Examples 1 to 4, and in Comparable Example 2 were immersed in de-ionized water, and stirred at five-minute intervals, and the time required for disintegration was checked up to 30 minutes after water immersion.

**Table 1**

| | Bonding agent | Moldability | Disintegration in water (min) |
|---|---|---|---|
| Example 1 | Tapioca starch | good | 15 |
| | Corn starch | Slightly good | 10 |
| | Acetylated starch (green peas, substitution 0.2) | good | 15 |
| | Acetylated starch (tapioca, substitution 0.3) | good | 20 |
| | Alpha-starch (potato) | good | 30 |
| | Hydroxypropyl starch (tapioca, substitution, 0.01) | good | 15 |
| | Oxidized starch | good | 10 |
| | Acid-treated starch | good | 10 |
| | Enzyme-treated dextrin | vert good | 30 |
| | Roasted dextrin | vert good | 30 |
| Example 2 | Preparation 1 | vert good | 30 |
| | Preparation 2 | vert good | 30 |
| Example 3 | Palm oil | good | 30 |
| Example 4 | Cane sugar | vert good | 15 |
| Comparable Example 2 | | bad | 10 |

From the results shown in Table 1, it was found that the test samples to which water had been added had a sufficient moldability, and among them, the test samples to which a low-viscosity starch had been added as a bonding agent exhibited excellent moldability, and disintegration tendency when put in water.

### Example 5

Water was sprayed over 50 g of EP pellets, FatRich 6 (Nippon Suisan), obtained by means of an extrude. The pellets adsorbed 1.5 g of water on the surface. To the pellets were added 1 g of enzymatically modified dextrin and 1.5 g of a starch powder chosen from the group listed in Table 2, and the mixture was introduced in a tubular retainer (made from polypropylene). The retainer, while being kept open, was placed in a microwave oven and heating was achieved by activating the oven at 800W for two minutes. The retainer was removed from the oven, and allowed to be cooled to room temperature. The mixture, now converted into a mold, was removed from the container. The mold had a size of 740 mm (length) x 50 mm (width) x 23 mm (thickness).

### Example 6

The same method as in Example 6 was employed to produce a mold except that 2.5 g of hot melt-type starch powder obtained in Preparation 1 or in Preparation 2 was used without the addition of water, instead of 1 g of enzymatically modified dextrin and 1.5 g of a starch powder chosen from the group listed in Table 2.

### Example 7

The same method as in Example 1 was employed to produce a mold except that 2.5 g of palm oil was used instead of 1 g of enzymatically modified dextrin and 1.5 g of a starch powder chosen from the group listed in Table 2. The palm oil, after being heated to about 70°C, was added to the solid feed, FatRich 6.

### Example 8

The same method as in Example 1 was employed to produce a mold except that 2.5 g of cane sugar was used instead of 1 g of enzymatically modified dextrin and 1.5 g of a starch powder chosen from the group listed in Table 1.

### Testing Example 3

The bending strength of the molds obtained in Examples 5 to 8 was assessed: the same test was repeated five times for each mold, and the average of five measurements was obtained for the mold, and the thus obtained results are listed in Table 2. Bending of each test sample was achieved by placing the sample on two fulcrums with an interval of 40 mm and moving a cross-head at a speed of 50 mm/min.

**Table 2**

| | Bonding agent | Bending Strength (kgf) |
|---|---|---|
| Example 5 | Tapioca starch | 1.63 |
| | Corn starch | 1.12 |
| | Acetylated starch (green peas, substitution 0.02) | 1.23 |
| | Acetylated starch (tapioca, substitution 0.03) | 1.38 |
| | Alpha-starch (potato) | 0.91 |
| | Hydroxylpropyl starch (tapioca, substitution 0.01) | 1.41 |
| | Oxidized starch | 0.75 |
| | Acid-treated starch | 0.86 |
| | Enzyme-treated dextrin | 3.98 |
| | Roasted dextrin | 3.14 |
| Example 6 | Preparation 1 | 3.96 |
| | Preparation 2 | 3.72 |
| Example 7 | Palm oil | 0.63 |
| Example 8 | Cane sugar | 1.42 |

The results in Table 2 are essentially in agreement with those in Table 1: the test samples to which a low-viscosity starch had been added as a bonding agent exhibited excellent bending strength. When palm oil was used as a bonding agent, its bonding activity was not high enough to firmly bond the pellets with each other and thus the bending strength of the mold product was rather low.

### Example 9

Water was sprayed over 50 g of EP pellets, artificial particulate feed for young fish. The pellets adsorbed 1.8 g of water on the surface. To the pellets was added 1.5 g of hot melt-type adhesive agent prepared as in Preparation 1, and the mixture was introduced in a tubular retainer (made from an acryl resin and its lid and bottom from wood). Closure of the retainer was achieved by slightly pressing a lid downward to condense the contents. The retainer was placed in a microwave oven and heating was achieved by activating the oven at 800W for two minutes. The retainer was removed from the oven, and allowed to cool to room temperature. The mixture, now converted into a mold, was removed from the retainer. The mold had a tubular shape with a size of 6 mm (diameter) x 8 mm (height).

### Example 10

Water was sprayed over 50 g of EP pellets, artificial particulate feed for young fish. The pellets adsorbed 3 g of water on the surface. To the pellets was added 1.5 g of enzymatically modified dextrin, and the mixture was introduced in a tubular retainer (made from an acryl resin and its lid and bottom from wood). Closure of the retainer was achieved by slightly pressing a lid downward to condense the contents. The retainer was placed in a microwave oven and heating was achieved by activating the oven at 800W for two minutes 20 seconds. The retainer was removed from the oven, and allowed to cool to room temperature. The mixture, now converted into a mold, was removed from the retainer. The mold had a tubular shape with a size of 6 mm (diameter) x 8 mm (height).

### Example 11

Vitamin beads having a diameter of 5 mm were prepared using a tablet-producing machine. To the vitamin beads were added EP pellets, FatRich 6 (Nippon Suisan), in equal amounts, and the mixture was processed as in Example 2 to give a mold.

### Example 12

Water was sprayed over EP pellets, FatRich 6 (Nippon Suisan). The pellets adsorbed 3 percent by weight of water on the surface. To the moistened pellets was added 5 percent by weight of enzymatically modified dextrin, and the mixture was introduced into tubular retainers (made from propylene) each having a diameter of 3 cm and a height of 2.5 cm. Closure of the retainer was achieved by slightly pressing a lid downward to condense the contents. Heating was achieved by activating a heating apparatus (Yuko Engineering) based on the continuous radiation of microwaves at 800W for 60 seconds. The retainers were removed from the heating apparatus, and allowed to cool to room temperature. The mixture, now converted into molds, was obtained in succession.

### Example 13

EP pellets prepared by means of an extruder were put into hard capsules mainly composed of gelatin, and sealed. It was possible to put tablets containing, for example, vitamins, minerals or an antibiotic into the same capsules with the solid molds.

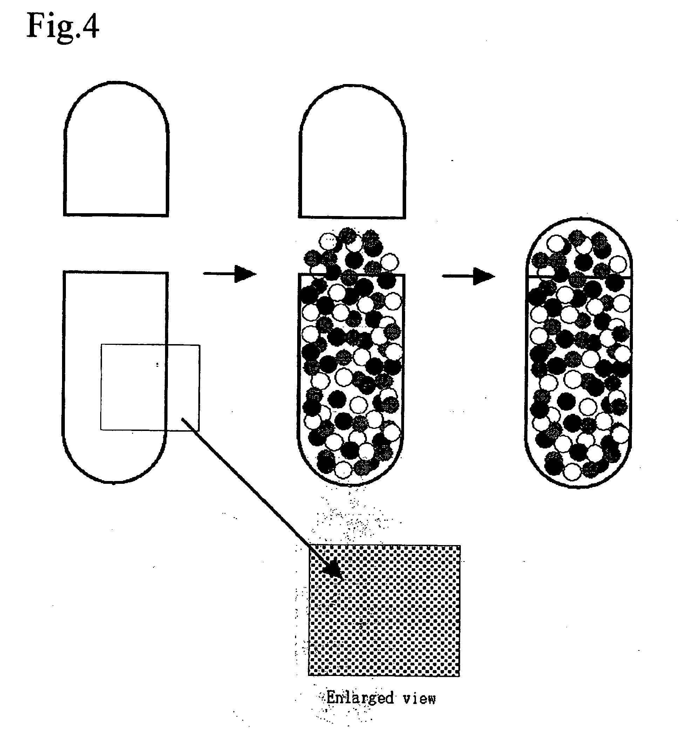

The capsules used were the same as those for general medical use. Since multiple pores whose diameter is smaller than the diameter of the tablets and of the pellets were opened on the surface of the capsules, air bubbles in the capsules, when the capsules were put in water for feeding fish, escaped through the pores to the outside, and thus the capsules did not float long on the surface of water, but readily sank. Moreover, since part of the water-soluble components enclosed in the capsules escaped through the pores to the outside and distributed in the water, it served as an agent to attract fish towards the feed capsules. Fig. 4 illustrates the feed capsule of this example.

Since the contents of the capsules were sufficiently moistened with water entering through the pores on the surface of the capsules while the capsules stayed in the water, they readily disintegrated, when the capsules were ingested in the digestive tract of fish, which facilitated the release of nutrients contained in the capsules. Furthermore, digestive juices secreted by the digestive system also penetrated through the pores into the interior of the capsules, which further promoted the disintegration not only of the contents but also of the capsules, and thus facilitated the digestion and absorption of the capsules and their contents.

### Example 14

EP pellets prepared by means of an extruder were introduced in a casing made of sheep gut usually used in the production of hams and sausages. During this operation, vitamins, minerals or an antibiotic in the form of tablets were introduced in the same casing together with the EP pellets, and sealed. After introduction of EP pellets in a casing, it is preferred the casing was de-aerated and closed.

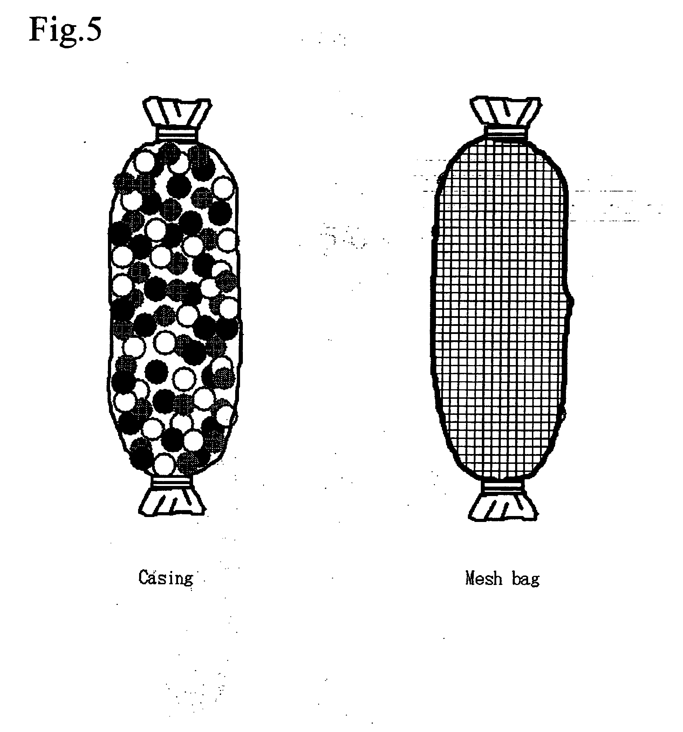

When multiple pores were prepared on the surface of a casing made of sheep gut and EP pellets were introduced into it, the casing exhibited the same effects as observed in the porous capsule described above. Fig. 5 illustrates exemplary casings used in this example.

### Use Example 1

### Study of the residence of compound feed of the invention in the digestive tract of fish

The compound feed of the invention was compared with comparable conventional EP pellets in terms of the digestibility by fish.

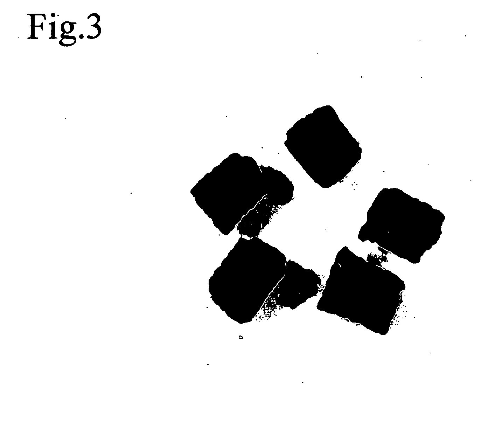

The test feed consisted of compound feed produced in Examples 9 and 10, and "Nissui Mixed feed Madai EP-8" (Nippon Suisan). The shape of the compound feed produced in Example 9 is shown in Fig. 3 as an illustration. The test fish were rainbow trout having an average weight of about 120 g.

The test proceeded as follows. Each water tank contained a test fish. The test fish were acclimated to eat feed as soon as the feed was served to them. Prior to the test, the fish were fasted for two days. A 1 g sample of test feed was given to each test fish, 8 hours later and 24 hours later the test fish was removed from the water tank, and the residence of the test feed in its digestive tract was examined.

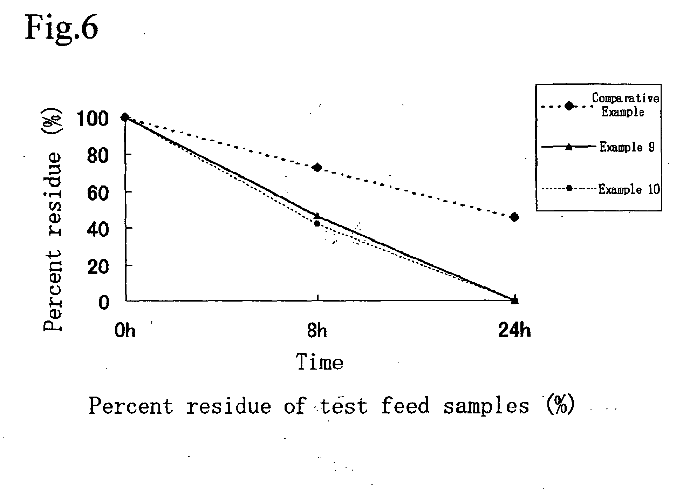

As seen from Fig. 6, the feed samples prepared according to the invention were more readily digested by the test fish than the comparable feed. Specifically, 24 hours after feeding, the feed samples prepared as in Examples 9 and 10 of the invention could not be observed in the stomach of the test fish, suggesting that they had been completely digested by that time. On the other hand, with regard to the comparable feed, 50% of its weight remained in the stomach.

From these results it was found that the feed samples prepared according to the invention were digested by the test fish about twice as rapidly as the comparable feed. It is expected from this that the feed prepared according to the invention will readily disintegrate when ingested in the digestive system of fish, and thus may promote the feed intake in winter.

### INDUSTRIAL APPLICABILITY

According to the present invention, it is possible to provide compound feed having a desired size, particularly compound feed having a sufficiently large size to be fed to large fish such as tuna, and to provide a simplified method for producing such compound feed. Moreover, according to the invention, it is possible to provide a simplified method for producing compound feed having a desired size which, even when supplemented with heat-labile components such as vitamins and pigments, is free from degradation even after being subjected to processing involving heating, particularly such stable compound feed having a sufficiently large size to be fed to large fish such as tuna.

## Claims

1. Compound feed, obtainable by combining one or more kinds of a solid feed, of which at least one kind is a pellet produced by means of an extruder, into compound feed having a size suitable for feeding cultured fish, wherein
said one or more kinds of solid feed is bonded together with a bonding agent.

2. Compound feed according to claim 1, wherein said bonding agent is selected from the group consisting of a water-soluble material, a protein material which is digestible in the fish's digestive tract, or a lipid material which is digestible in the fish's digestive tract.

3. Compound feed according to claim 1, obtainable by combining said one or more kinds of solid feed with a component in the form of tablets, granules or powder.

4. Compound feed according to claim 3, wherein said component in the form of tablets, granules or powder is susceptible to heat.

5. Compound feed according to any of claims 1 to 4, whose diameter or major axis length is 5 cm or longer.

6. Compound feed according to any of claims 1 to 5, wherein said bonding agent is a bonding agent which melts when heated (hot melt-type bonding agent).

7. Compound feed according to claim 6, wherein the hot melt-type bonding agent is one chosen from the group comprising water-containing starch powder, low-viscosity starch powder containing a starch plasticizer, water-containing sugar whose degree of polymerization is 10 or lower, and oil or fat which is solid at normal temperature.

8. Compound feed according to claim 7, wherein the starch plasticizer is urea and/or polyatomic alcohol.

9. Compound feed, obtainable by combining one or more kinds of a solid feed, of which at least one kind is a pellet produced by means of an extruder, into compound feed having a size suitable for feeding cultured fish, wherein
the combination is achieved by packing one or more kinds of solid feed with an edible casing.

10. Compound feed as described in claim 9, wherein the edible casing is in the form of capsules.

11. Compound feed according to claim 9 or 10, wherein the edible casing has pores on its surface whose size is sufficiently small to prevent the escape of the contents.

12. A method for producing compound feed comprising a step of combining one or more kinds of a solid feed, of which at least one kind is a pellet produced by means of an extruder, into compound feed having a size suitable for feeding cultured fish, wherein the combining step comprises
a step of bonding said one or more kinds of solid feed together with a bonding agent.

13. A method according to claim 12 for producing compound feed, wherein the bonding agent is a bonding agent which melts when heated (hot melt-type bonding agent).

14. A method according to claim 13 for producing compound feed, wherein the hot melt-type bonding agent is one chosen from the group comprising water-containing starch powder, low-viscosity starch powder containing a starch plasticizer, water-containing sugar whose degree of polymerization is 10 or lower, and oil or fat which is solid at normal temperature.

15. A method for producing compound feed comprising a step of combining one or more kinds of a solid feed, of which at least one kind is a pellet produced by means of an extruder, into compound feed having a size suitable for feeding cultured fish, wherein the combining step comprises
a step of packing one or more kinds of solid feed with an edible casing.

## Patentansprüche

1. Mischfutter, das durch das Vereinigen von einer oder mehr Arten eines Festfutters, von welchen zumindest eine Art ein mittels einer Strangpresse hergestelltes Pellet ist, zu einem Mischfutter mit einer Größe, die zum Füttern von Zuchtfisch geeignet ist, erhältlich ist, wobei
die eine oder mehr Arten von Festfutter mit einem Bindungsagens zusammengebunden ist/sind.

2. Mischfutter nach Anspruch 1, wobei das Bindungsagens aus der Gruppe ausgewählt ist, die aus einem wasserlöslichen Material, einem Proteinmaterial, welches im Fischverdauungstrakt verdaubar ist, oder einem Lipidmaterial, welches im Fischverdauungstrakt verdaubar ist, besteht.

3. Mischfutter nach Anspruch 1, das durch das Vereinigen der einen oder mehr Arten von Festfutter mit einer Komponente in der Form von Tabletten, Granulaten oder Pulver erhältlich ist.

4. Mischfutter nach Anspruch 3, wobei die Komponente in der Form von Tabletten, Granulaten oder Pulver anfällig gegenüber Wärme ist.

5. Mischfutter nach einem der Ansprüche 1 bis 4, dessen Durchmesser oder Hauptachsenlänge 5 cm oder länger ist.

6. Mischfutter nach einem der Ansprüche 1 bis 5, wobei das Bindungsagens ein Bindungsagens ist, welches beim Erwärmen schmilzt (Bindungsagens des Heißschmelztyps).

7. Mischfutter nach Anspruch 6, wobei das Bindungsagens des Heißschmelztyps eines ist, das aus der Gruppe ausgewählt ist, die Wasser enthaltenes Stärkepulver, niederviskoses Stärkepulver, das einen Stärkeweichmacher enthält, Wasser enthaltender Zucker, dessen Polymerisationsgrad 10 oder niedriger ist, und Öl oder Fett, welches bei Normaltemperatur fest ist, umfasst.

8. Mischfutter nach Anspruch 7, wobei der Stärkeweichmacher Harnstoff und/oder mehratomiger Alkohol ist.

9. Mischfutter, das durch das Vereinigen einer oder mehr Arten eines Festfutters, von welchen zumindest eine Art ein mittels einer Strangpresse hergestelltes Pellet ist, zu einem Mischfutter mit einer Größe, die zum Füttern von Zuchtfisch geeignet ist, erhalten ist, wobei
das Vereinigen durch Verpacken einer oder mehr Arten von Festfutter mit einer essbaren Hülle erzielt wird.

10. Mischfutter nach Anspruch 9, wobei die essbare Hülle in der Form von Kapseln ist.

11. Mischfutter nach Anspruch 9 oder 10, wobei die essbare Hülle auf seiner Oberfläche Poren aufweist, dessen Größe ausreichend klein ist, um den Austritt der Inhalte zu verhindern.

12. Verfahren zur Herstellung von Mischfutter, das einen Vereinigungsschritt von einer oder mehr Arten eines Festfutters, von welchen zumindest eine Art ein mittels einer Strangpresse hergestelltes Pellet ist, zu einem Mischfutter mit einer Größe, die zum Füttern von Zuchtfisch geeignet ist, umfasst, wobei der Vereinigungsschritt
einen Zusammenbindungsschritt der einen oder mehr Arten von Festfutter mit einem Bindungsagens umfasst.

13. Verfahren nach Anspruch 12 zur Herstellung von Mischfutter, wobei das Bindungsagens ein Bindungsagens ist, welches beim Erwärmen schmilzt (Bindungsagens des Heißschmelztyps).

14. Verfahren nach Anspruch 13 zur Herstellung von Mischfutter, wobei das Bindungsagens des Heißschmelztyps eines ist, das aus der Gruppe ausgewählt ist, die Wasser enthaltendes Stärkepulver, niederviskoses Stärkepulver, das einen Stärkeweichmacher enthält, Wasser enthaltenden Zucker, dessen Polymerisationsgrad 10 oder niedriger ist, und Öl oder Fett, welches bei Normaltemperatur fest ist, umfasst.

15. Verfahren zur Herstellung von Mischfutter, das einen Vereinigungsschritt einer oder mehr Arten eines Festfutters, von welchen zumindest eine Art ein mittels einer Strangpresse hergestelltes Pellet ist, zu einem Mischfutter mit einer Größe, die zum Füttern von Zuchtfisch geeignet ist, umfasst, wobei der Vereinigungsschritt
einen Verpackungsschritt von einem oder mehr Arten an Festfuttern mit einer essbaren Hülle umfasst.

## Revendications

1. Aliment composé, pouvant être obtenu en combinant un ou plusieurs type(s) d'aliment solide, dont au moins un type est une pastille produite au moyen d'une extrudeuse, dans un aliment composé ayant une taille appropriée pour nourrir des poissons d'élevage, où
ledit ou lesdits plusieurs type(s) d'aliment solide est/sont lié(s) conjointement avec un agent de liaison.

2. Aliment composé selon la revendication 1, dans lequel ledit agent de liaison est choisi dans le groupe constitué d'une matière hydrosoluble, d'une matière protéique qui est digestible dans le tube digestif des poissons, ou d'une matière lipidique qui est digestible dans le tube digestif des poissons.

3. Aliment composé selon la revendication 1, pouvant être obtenu en combinant ledit ou lesdits plusieurs type(s) d'aliment solide avec un composant sous forme de comprimés, de granulés ou de poudre.

4. Aliment composé selon la revendication 3, dans lequel ledit composant sous forme de comprimés, de granulés ou de poudre est sensible à la chaleur.

5. Aliment composé selon l'une des revendications 1 à 4, dont le diamètre ou la longueur de grand axe est de 5 cm ou plus.

6. Aliment composé selon l'une des revendications 1 à 5, dans lequel ledit agent de liaison est un agent de liaison qui fond lorsqu'il est chauffé (agent de liaison de type thermofusible).

7. Aliment composé selon la revendication 6, dans lequel l'agent de liaison de type thermofusible est un agent choisi dans le groupe comprenant une poudre d'amidon contenant de l'eau, une poudre d'amidon de faible viscosité contenant un plastifiant d'amidon, du sucre contenant de l'eau dont le degré de polymérisation est inférieur ou égal à 10, et de l'huile ou de la graisse qui est solide à température normale.

8. Aliment composé selon la revendication 7, dans lequel le plastifiant d'amidon est de l'urée et/ou un alcool polyatomique.

9. Aliment composé, pouvant être obtenu en combinant un ou plusieurs type(s) d'aliment solide, dont au moins un type est une pastille produite au moyen d'une extrudeuse, dans un aliment composé ayant une taille appropriée pour nourrir des poissons d'élevage, où
la combinaison est réalisée en emballant un ou plusieurs type(s) d'aliment solide avec une enveloppe comestible.

10. Aliment composé tel que décrit dans la revendication 9, dans lequel l'enveloppe comestible est sous forme de capsules.

11. Aliment composé selon la revendication 9 ou 10, dans lequel l'enveloppe comestible a des pores à sa surface dont la taille est suffisamment petite pour empêcher la fuite des contenus.

12. Procédé pour la production d'aliment composé comprenant une étape consistant à combiner un ou plusieurs type(s) d'aliment solide, dont au moins un type est une pastille produite au moyen d'une extrudeuse, dans un aliment composé ayant une taille appropriée pour nourrir des poissons d'élevage, où l'étape de combinaison comprend
une étape de liaison dudit ou desdits plusieurs type(s) d'aliment solide conjointement avec un agent de liaison.

13. Procédé selon la revendication 12 pour la production d'aliment composé, dans lequel l'agent de liaison est un agent de liaison qui fond lorsqu'il est chauffé (agent de liaison de type thermofusible).

14. Procédé selon la revendication 13 pour la production d'aliment composé, dans lequel l'agent de liaison de type thermofusible est un agent choisi dans le groupe comprenant une poudre d'amidon contenant de l'eau, une poudre d'amidon de faible viscosité contenant un plastifiant d'amidon, du sucre contenant de l'eau dont le degré de polymérisation est inférieur ou égal à 10, et de l'huile ou de la graisse qui est solide à température normale.

15. Procédé pour la production d'aliment composé comprenant une étape consistant à combiner un ou plusieurs type(s) d'aliment solide, dont au moins un type est une pastille produite au moyen d'une extrudeuse, dans un aliment composé ayant une taille appropriée pour nourrir des poissons d'élevage, où l'étape de combinaison comprend
une étape d'emballage d'un ou de plusieurs type(s) d'aliment solide avec une enveloppe comestible.
